# EUROPEAN PATENT APPLICATION

(11) **EP 2 933 734 A1**
(43) Date of publication of application: **21.10.2015**
(21) Application number: 14165270.1
(22) Date of filing: 17.04.2014
(51) Int. Cl.: G06F 17/30

(54) **Method and system for the structural analysis of websites**

(71) Applicant: OnPage.org GmbH, 80331 München (DE)
(72) Inventor: Jacob, Jan Hendrik Merlin, 80331 München (DE)
(74) Representative: Harrison, Robert John

(57) **Abstract**

A method for management of websites (10) is disclosed. The method comprises accessing a plurality of pages (20) of a domain of at least one of the websites (10), analyzing the accessed plurality of pages (20) to extract technical page metadata (30) and content (31) from the accessed plurality of pages (20) and creating a plurality of data entries (40) in a non-transitory database storage (50) relating to the extracted technical page metadata (30).

## Description

### Cross-Reference to Related Applications

None

### Field of the Invention

The field of the invention relates to a method and a system for the structural analysis of websites

### Background of the invention

The internet has substantially changed the way in which computer users gather information, establish relationships with each other and communicate with each other. The internet has also changed the way in which retailers and other companies seek potential customers and has generated a substantial amount of business in on-line advertisements to promote the sale of products. This change has resulted in a huge explosion in the number of webpages that are visited by the computer users. Search engines, such as Google, Bing, Yahoo and others, have been developed to enable the computer users or searchers to identify the webpages which they desire. The search engines generally use so-called crawlers, which crawl through the web from one of the webpages to another one of the webpages following links or hyperlinks between the individual ones of the webpages. Currently the crawlers generally take the content and some of the metadata from accessed webpages to enable the search engines to automatically analyse the content provided in order to present the searcher with a list of search results relevant to any of the search terms of interest to the searcher and to direct the searcher to the webpage of interest

A whole industry has been built around the search engine optimization (SEO), which is the business of affecting the visibility of the webpage in the search engine's search result. It is known that a higher ranking on the search engine's results page results (SERPs) in the webpage being more frequently visited. Retailers are, for example, interested in having their webpages ranked highly to drive traffic to the corresponding website.

Search engine optimization considers how the search engines work as well as the terms or key words that are typed into the search engines by the computer user. One of the commonest issues resulting in the webpage not being well displayed in the search results list has a poor structure and insufficient contents of the website containing the webpage. The chances of the webpage being indexed in or by the search engine increases if the webpage is well structured and the webpage is in a well-structured website.

One example of a webpage is a so-called landing page, which is sometimes known as a lead capture page (or a lander). The landing page is a webpage that appears in response to clicking on a search result from the search engine, or on a link in an online advertisement. The general goal of the landing page is to convert visitors to the website into sales or leads. On-line marketers can use click-through rates and conversion rates to determine the success of an advertisement or text on the page. It should be noted that the landing page is generally different than a homepage of the website. The website will often include a plurality of landing pages directed to specific products and/or offerings. The homepage is the initial or main web page of the website, and is sometimes called the front page [by analogy with newspapers]. The homepage is generally the first page that opens on entering a domain name for the website in a web browser.

A number of patents relating to the process of search engine optimization are known. For example, Brightedge Technologies, San Mateo, Calif, has filed a number of applications that have matured into patents. For example, U.S. patent 8,478,700 relates to a method for the optimized placement of references to a so-called entity. This method includes the identification of at least a search time, which is for optimization. U.S. patent 8,577,863 is also used for search optimization, as it enables a correlation between external references to a webpage with purchases made by one or more of the visitors to the webpage.

The known prior art discusses techniques for search engine optimization. The disclosures do not, however, provide solutions for analysing the structure of the website to improve a website's performance in search engine rankings.

### Summary of the invention

This disclosure teaches a method and system for management of a website, including analysis of the structure of the website. The method comprises accessing a plurality of webpages of a domain associated with the website. The accessed plurality of webpages are analysed in order to extract technical webpage metadata and the content from the web pages and a plurality of data entries is created into a database storage. These data entries enable a programmer, manager or other user of the system to identify and rectify issues related to the structure and content of the website to increase its performance and to improve its ranking in a search engine.

The term "technical webpage meta data" is also called "technical webpage data" or "webpage data" and is intended to encompass the metrics calculated for the webpage 20 within the website 10. This includes all the "URL centric" data, which is gathered and related to one specific URL.

In general and without limitation, this technical webpage metadata consists at least of the following items:

**Internal Meta Data:** HTML meta data that is defined in the webpages <head> section, such as meta robots, meta description, title, canonical, data, etc.

**External Meta Data:** Meta data that affects the document, but is not specified in the document itself, such as information in the sitemap.xml, robots.txt, etc. Additionally, this could also include website external data such as incoming links, Facebook Likes and Twitter Tweets containing the URL of the specific document etc.

**URL/Architectural Meta Data:** Data in context of the website architecture. This includes the (sub-)domain of the specific document, subfolders in the URL, detection of invalid characters in the url, session IDs, click length., etc.

**Server Response Header:** data, that is sent back by the web server when accessing the URL of the specific document. That includes information like HTTP status code, language, MIME Type, etc.

**Content Metrics:** information and statistics based on the content of the specific document like reading level, most important/relevant terms, content to code ratio, text uniqueness within the website, etc.

**Implicit- Benchmarking-Data:** Information, that is gathered in context of the crawl-process, like page speed, server response time, time to first byte, filesize, etc.

The method also includes the selection of at least one of the data entries and generation of a file for displaying information relating to the data entry in an output file for display on, for example, a computer screen. The method also enables the generation of graphs from aggregated data.

In one aspect of the invention, technical domain metadata, such as a sitemap or a robots.txt file can also be correlated with the webpages.

A number of use cases are known in which this method can be used. For example, the quality of a landing page used and accessed by the search engine can be improved. It is possible to either identify quickly broken links between ones of the webpages. It is also possible to improve the quality of the content displayed on the webpages.

This disclosure also teaches a system for the management of websites, which comprises a plurality of crawlers that are sent to website for analysing the technical page metadata, and, if required, the technical domain metadata. The results returned by the plurality of crawlers are stored in a data storage system, which has a plurality of data entries relating to the technical page metadata and, if available the technical domain metadata. A data analysis system, capable all the receiving input commands from a programmer, is incorporated into the system and this data analysis system is enabled to create output files from accessed data in the data storage system. In one further aspect of the disclosure, the content of the webpages is also analysed by the crawler.

The disclosure also teaches a computer program product which is in non-transitory computer storage media and which has computer-executable instructions for conversing a computer system to carry out the method of the disclosure.

### Description of the figures

Fig. 1 shows an overview of the system for the structural analysis of a website.
Fig. 2 shows an outline of the method for the structural analysis of a website.
Fig. 3 shows exemplary results of an output file displayed on a computer screen.

### Detailed description of the invention

The invention will now be described on the basis of the drawings. It will be understood that the embodiments and aspects of the invention described herein are only examples and do not limit the protective scope of the claims in any way. The invention is defined by the claims and their equivalents. It will be understood that features of one aspect or embodiment of the invention can be combined with a feature of a different aspect or aspects and/or embodiments of the invention.

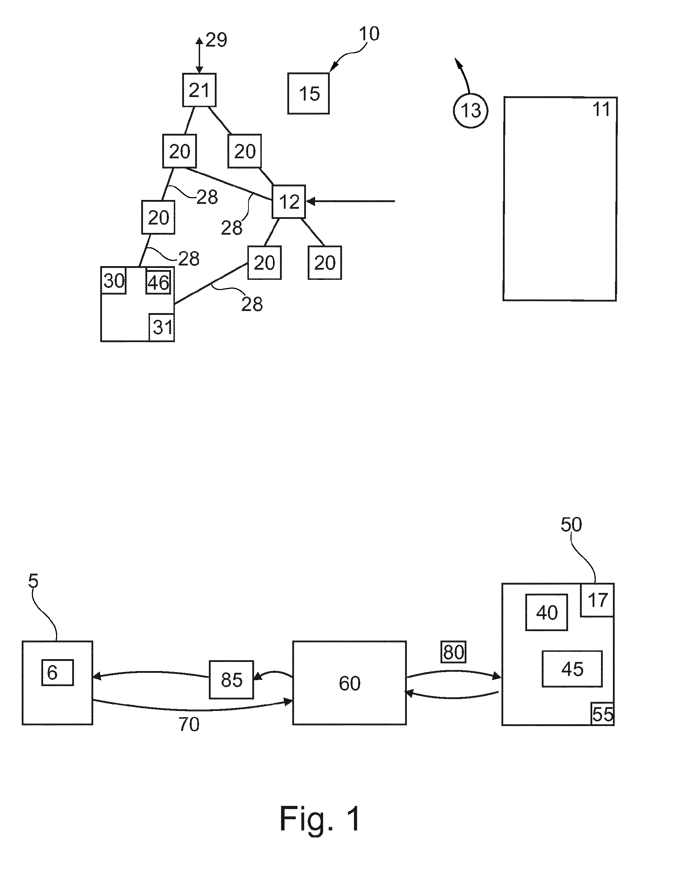

Fig. 1 shows an example of the architecture of a system 1 for the structural analysis of a website 10. The website 10 is available through a domain and is generally identified by a domain name and could also have a number of sub domains. The website 10 comprises a plurality of webpages 20 that are interlinked with each other by internal links 28. The website 10 includes a homepage 21 and may also include one or more landing pages 12. Only a single landing page 12 is shown for simplicity. It will be noted that the landing page 12 is a particular example of the webpage 20.

Generally the webpages 20 have content 31 and technical page metadata 30 associated with the webpages 20. In Fig. 1 only one of the webpages 20 is shown with the content 31 and the technical page metadata 30 for simplicity. The content 31 is the plain text and/or images that a user of the website 10 can read on a browser 6 running on a user's computer 5. The technical page metadata 30 include, but are not limited to, the formatting and other instructions incorporated into the webpages 20, which control, for example, the output of the webpage 20 on the user's computer 5 in the browser 6 as well as other functions such as linking to other websites outside of the website 10. The technical page metadata 30 also includes instructions that are read by a search engine 11 or by a crawler 13 sent by the search engine 11 to analyze the structure and the content 31 of the website 10.

The homepage 21 of the website 10 has usually several items of technical domain metadata 15 associated with the website 10. The robots.txt file can be read by the crawler 13 sent by the search engine 11 (or other program) and indicates to the crawler 13 which ones of the webpages 20 can be crawled and/or displayed to the user. The sitemap indicates the structure of the website 10. It will be noted, however, that some websites 10 do not have either of these two items. Other items of technical page metadata include, but are not limited to, page speed, css formats, follow/nofollow tags, alt tags, duplicate contents, automatic content analysis, redirects etc.

It will be seen from the left-hand side of Fig. 1 that the webpages 20 are generally organized in a hierarchical manner. There are, however, internal links 28 between different ones of the webpages 20. There can also be external links 29 which are both incoming and outgoing. The external links 29 link to external webpages external to the domain of the website 10. Outgoing ones of the internal links 28 and the external links 29 are generally displayed by highlighted content or by content with fonts in a different color, commonly blue, to the user. The outgoing links have a link tag associated with them, which includes a (uniform resource indicator) URI, and indicates the IP address or domain name and folder and optionally an anchor of the webpage 20 thus linked.

The website 10 may also have incoming ones of the external links 29 from outside of the website 10. Many of these incoming links 29 will direct to the homepage 21, but it is also possible to have the incoming links 29 directed to another one of the webpages 20, such as the landing page 12, on the website 10. One example of the incoming link 29 is shown with respect to the landing page 12. The landing page 12 will also have content 31 and technical page metadata 30. The landing page 12 is typically used to introduce a subset of the webpages 20. For example, a clothing retailer will often have the homepage 21 introducing all of its products lines and one or more landing pages 12 that are dedicated to a single one of the product lines. The landing page 12 is used as a focus for a particular product or group of products, and is for example, the first webpage seen by the user in response to a click on a result presented by the search engine 11 in the browser 6.

The use of the landing page 12 can be illustrated by the example of the clothing retailer. Suppose a customer is searching for [shoes] of a particular brand. The customer will enter the search term in a search bar [shoe brand] and will be presented with a list of results. The customer clicks on one of the results and the browser used by the customer is directed to the landing page 12 from where the customer can click through to a product of interest. Suppose the customer is also interested in purchasing trousers. The customer uses the search terms [trouser] and [brand] and will be directed to another landing page 12. The customer can also just enter the name of the brand and will often land at the home page 21 from which the customer can click down into the landing page 12 along the paths indicated by the internal links 28.

The bottom right-hand side of Fig. 1 shows a database storage 50 present in nonvolatile memory. The database storage 50 has a plurality of data entries 40 and a plurality of link tables 45. The database storage 50 is managed by the database management system 55. A number of database management systems 55 are known and these can be used to manage the data entries 40 and the link tables 45. The webpages 20 have at least one entry 40 in the database storage 50. The data entries 40 are in the form of a structured data set with one or more tables and can be accessed by typical query commands. It would be possible also to use an unstructured data set.

A data analysis system 60 can query the data entries 40 in the data base storage 50 and extract data results 80 from the plurality of data entries 40 and the link tables 45 to produce an output file 85. The output file 85 can be used to produce a display in the browser 6 on the user's computer 5 and/or a printout. The data analysis system 60 can be for example a SQL server.

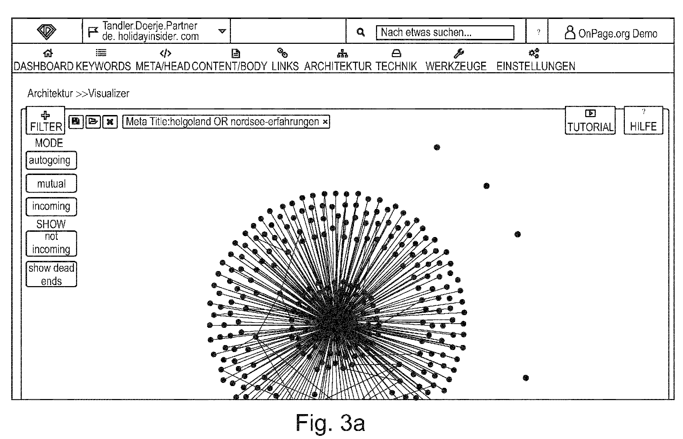

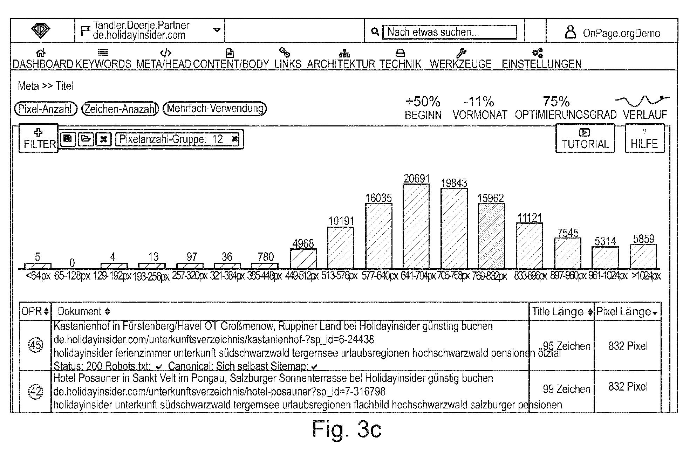

The user can input queries at the computer 5 in the form of input commands 70 to the data analysis system 60 to analyze the data entries 40 and the link tables 45. The user can also use a facetted search tool running in the browser 6 to analyze the data entries 40 and link tables 45, as shown in Fig. 3a and 3c.

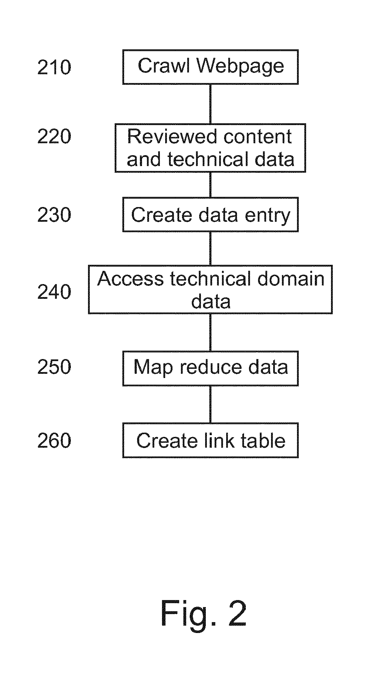

Fig. 2 shows the method for creation of the data entries 40 in the database storage 50. In a first step 210 a plurality of the webpages 20 of the website 10 are accessed by sending the crawler 13 as a bot from the data storage 50 to analyze the structure of the website 10.

The crawler 13 reviews the content 31 and the technical page metadata 30 of the webpage 20 in step 220. In this disclosure, the crawler 13 can access and analyze the content 31. In one aspect of the invention, the analysis is carried out by counting the number of occurrences of particular words or terms in the content 31. These results are sent to database storage 50.

The crawler 13 creates in step 230 an initial data entry 40 for the accessed webpage 20 in the data base storage 50 in step 230. The data entry 40 comprises a number of fields, whose values are determined by the crawler 13 from analysis of the webpage 20. The fields in the data entry 40 include, but are not limited to, a title extracted from the title tag, subfolder, presence or absence of title tag, can the webpage 20 be displayed to user, can the webpage be indexed by search engine 11, counts of the number of individual words in the content 31, indications of the time of loading of the first byte of the webpage 20, response time of the server hosting the website 10, the file size of the webpage 20, the language of the webpage 20, any compression algorithms associated with the webpage 20, the number of words on the webpage 20, the ratio of the content 31 to code on the webpage 20, presence of canonical tags, reading level, images, reader writes, etc.

In step 230 the storage in the field of the data entry 40 is continued until all of the identified webpages 20 on a particular one of the websites 10 have been crawled. In some aspects of the disclosure, all of the webpages 20 will be crawled. In other aspects of the invention only a specified number of the webpages 20 or a certain data volume will be crawled to save resources.

The initial data entries 40 are then analyzed. In one aspect of the disclosure, the analysis is carried out by a map reduce procedure running on a plurality of processors, as is known in the art. One of the functions of the analysis is to review all of the entries of the outgoing internal links 28 to determine which one(s) of the webpages 20 are connected between each other.

The crawler 13 will also access in step 240 the technical domain metadata 15, as noted above. This will give the location of the webpages 20 in the website 10 by review of the sitemap and will also indicate from the robots.txt file which ones of the webpages 20 may be indexed by the search engine 11. The crawler 13 continues reviewing all of the webpages 20 indicated in the sitemap. It will be noted that the crawler 13 will generally analyze all of the webpages 20 and does not limit the analysis to those webpages indicated by the robots.txt file, unless specified otherwise. In a further aspect of the invention, the can define or construct its own robots.txt file, which is stored in the data storage 50.

The data storage system 55 will also create in step 260 a link table 45 in the database base storage 50. The link table 45 shows all of the internal links 28 between the webpages 20 of the website 10, as well as outgoing external links 29. It may also be possible by using outside extracted data to determine which ones of the incoming external links 29 link to webpages 20 within the website 10. Information can then also be included into the link table 45 if it is available.

The analysis can also determine the maximum number of the internal links 28 from all of the webpages 20 to the homepage 21. This can be illustrated by considering the very left-hand side of the website 10 shown in Fig. 1 in which it is seen that the bottom most one of the webpages 20 requires at least three links (or hops) within the website 10 to be reached from the homepage 21.

It will be appreciated that the method of the disclosure in step 210 reviews many, if not all, of the webpages 20 in the website 10. This is different than the crawling usually carried out by the search engines 11 which tend to ignore those webpages 20, which are embedded deeply within the website 10 and require a significant number of hops to reach the buried webpages from the homepage 21.

### Examples

The system and method of this disclosure can be used to check the quality of the website 10. A number of use cases will now be discussed. It will be appreciated that the use cases listed here are not limiting of the invention and that other use cases can be developed.

### Defect links

The crawler 13 is used in conjunction with the map reduce procedure to create the link table 45 in the data base storage 50, as discussed above. The link table 45 indicates both the internal links 28 within the website 10 and the outgoing external links 29. It might be possible to include details of incoming external links 29, but this information needs to be obtained from other databases (as noted above). The crawler 13 follows the internal links 28 within the website 10 to access the linked ones of the webpages 20. The crawler 13 may also follow the outgoing external links 29 outside of the website 10, and can analyze external webpages 20. The crawler 13 will enter into the linked table 45 the source of the webpage 20, from which the link is initiated, and the destination webpage 20, which is the destination of the internal link 28 or the outgoing external link 29, the anchor tag, and the status code of the webpage 20 reached by internal link 28 or the outgoing external link 29.

For example, it is not uncommon for the outgoing internal link 28 or the outgoing external link 29 to refer to one of the webpages 20 that is no longer present. This generally happens when the referenced webpage 20 has been deleted. In this example, a status code 404 will be sent back by the webserver hosting the website 10. The link table 45 will therefore indicate the source page 20 of the outgoing internal link 28 or the outgoing external link 29, as well as a destination webpage. There are other types of status codes that may be recorded in the linked table 45.

The user can then send an input command 70 to the data analysis system 60 in order to produce the output file 85 which shows all of the webpages 20 having, for example, broken links (status code 404). The data analysis system 60 does this by accessing the link table 45 and the page metadata entries 40. The user can then edit the webpage 20 to restore the broken internal links 28 or external links 29 or remove the internal links 28 or the external links 29 to broken pages.

### Documents without title

The system 1 can also be used to display those webpages 20 that have no title. The <title> tag in HTML indicates a title for the webpage 20. One programming error that is sometimes made is a failure to tag the title of the webpage 20. The plain text of the title may be present as part of the content 30, but the technical page metadata is not present (i.e. <title> tag). The crawler 13 will look for the title tag on each of the webpages 20 visited and record in the page metadata entry 40 for the accessed webpage 20 the presence or absence of the <title> tag.

The user can then issue an input command 70 requesting that the output file 85 indicates those webpages 20 having no <title> tags. The data analysis system 60 carries out this by accessing the entries 40 in the database storage 50 and reviewing the fields in the database 50 relating to the title which have null entries.

### Length of titles

Similarly the system 1 can determine the length of the text of the title by calculating the length depending on the number of characters in the title. This is done by accessing the content 31 indicated by the [title] tag and then calculating the width of each of the characters in the title text. It is known that the width of each of the letters differ and a table for a characteristic font, such as Times New Roman, can be accessed to determine the total length of the title in pixels.

It is known that the Google search engine 11, for example, is only programmed to display titles having a maximum (pixel) width. Therefore the system 1 can determine all of those pages having a title that is longer than the maximum width set by the search engine 11 for display in the browser 6.

In one aspect of the invention, a list of all (or a selection thereof) of the titles can be generated in the output file and those characters in the text of the title which exceeds the maximum width set by the search engine 11 can be highlighted in a different color in the output file 85 so that the programmer or content supplier can limit the length of the title.

### GET parameter

The crawler 13 can review the GET parameters on each of the accessed webpages 20. The crawler 13 can create in the data storage 50 a table or sub-table for the presence or absence of the GET parameters 40. The user can then review those webpages 20 having a large number of GET parameters, finding outdated parameters, determining endless loops etc.

### Non-indexed webpages

The robots.txt file is used to indicate those webpages 20 which should or should not be listed in a search engine. One programming error that is made is to forget to change the entries in the robots.txt file when updating the website 10. For example, the new webpages 20 are initially indicated as being non-indexable by a search engine, as the new or revised webpages 20 should not be displayed to a searcher before the content 31 is completed. Once the content 31 has been completed, the entry in the robots.txt file should be amended. This is occasionally forgotten and the searcher still continues to see the older content, or in some cases no content at all, as the outdated content 31 is usually deleted by the new version. The crawler 13 sends the information from the review of the robots.txt file to the page metadata entries 40 to indicate which ones of the webpages 20 are indexable.

### Measurement of landing webpage quality

The landing page 12 is, as discussed above, the preferred webpage 20 to which the searcher is directed when clicking the search results from a search engine. The programmer of the website 10 will endeavor to ensure that the landing page 12 is ranked highly in the search results presented by the search engine. The programmer is interested in establishing the number of internal links 28 pointing to the landing page 12, as well as the correct indexing of the landing page 12. Should a word count of the content 31 of the landing page 12 also have been stored in step 220, then the programmer will be interested in understanding the frequency of occurrence of the search terms used in the content 31.

The system 1 of this disclosure can access information about the metatags in the data entries 40 as well as information about the referring links from internal links 28 from the link table and present these as a result in the output file 85. The programmer can review the results in the output file 85 an can see whether the landing page 12 is the preferred one of the webpages 20 presented in a set of search results.

The system 1 is also able to access the word count which is stored as a matrix relating to the number of occurrences of particular words on the landing page 12. The most popular terms, or weighted ones of the most popular terms, can also be displayed in the output file 85 so that the programmer or other investigator is able to determine whether this landing page 12 is a suitable landing page for its function of converting visitors to the landing page 12 into leads or actual sales. Various weighting functions can be used, including the frequency of the use of the terms in the Internet, relevance of the terms for the technology or products, etc.

### Verification of the sitemap

The system 1 may have stored the sitemap from the website 10 as one of the items of technical domain metadata in the database storage 50. The system1 will have also stored information about all of the webpages 20 identified and accessed by the crawler 15. The data analysis system 60 can compare the entries from the sitemap with the plurality of the data entries 40 and verify whether all of the webpages 20 have a corresponding entry in the sitemap, as would be expected. The system 1 can also determine the latest date on which an update of the webpage 20 was recorded in the sitemap. The data analysis system 60 can present in the form of the output file 85 information concerning any of the webpages 20 which have no corresponding entry in the sitemap and can also indicate which ones (if any) of the entries in the sitemap have no corresponding webpage 20.

### Verification of robots.txt

Similarly, to the verification of the sitemap, the system 1 can also indicate which ones of the webpages 20 are able to be displayed or not displayed to the searcher in the search engine 11 this allows the programmer to verify that the results presented are up to date. This feature can be correlated with internal links 28 to identify any relevant pages not being present in the search results.

### Verification of file structure

The storage of the internal links 28 in the link tables 45 allows the link distance, i. e. number of internal links 28, to be established between the homepage 21 and all of the other ones of the webpages 20. The minimum number of internal links 28 (or hops) that needs to be traverse to reach any one of the webpages from the homepage 21 (or a landing page 27) can be added as one of the items in the data entry 40.

A listing of the webpages 20 and the associated parameter for link distance can then be presented to the user of the system 1 in the output file 85.

### Verification of subfolder

Similarly, the data entry 40 can contain the hierarchical level of the subfolder in which the webpage 20 is stored. This enables the folder structure of the website 10 to be optimised. For example, some search engines 11 will not index any webpages 20, which are in a sub folder greater than a particular number of subfolders in the folder hierarchy. This will therefore affect the ranking of the "buried" or affected webpages 20 in a negative manner or indeed prevent these buried webpages 20 from being indexed at all.

### Number of images

The system 1 can also count the number of image files on any one of the webpages 20 and store this number as one of the parameters in the data entry 40. The internal links 28 to the image files will also be stored in the link table 45. The number of images can affect the rates of load of the webpage 20 and can also have effects on the ranking of any one of the webpages 20 in the search engine 11.

### Presence of ALT tags

An ALT tag is a tag that is used to indicate the content of an image. For example, an image of Queen Elisabeth II would often have the ALT tag "Queen Elisabeth II". This ALT tag is not displayed to most of the users (an exception being for blind users using a speech output). The ALT tag is often used by the search engine 11 to classify the images. The lack of an ALT tag associated with the image can mean that the image is not evaluated by the search engine 11 and as a result will not appear in any one of the search results.

It is possible to handle separate image tables in the data base storage 50 in which the presence of the image and the associated ALT tag is stored. It is also possible to include this data in one of the data entries 40 in which a parameter indicates whether there are missing ALT tags on a particular one of the webpages 20. The data that is stored includes the presence of multiple ALT tags for the same image or the same ALT tag being used for multiple images.

### Presence of incoming and outgoing links

The link table 45 records the incoming and outgoing internal links 28, as well as the outgoing and incoming external links 29. The link table 45 can be evaluated for any one of the webpages 20 to produce a statistic indicative of the number of the incoming links and the outgoing links. Similarly, it would be possible to use the same link table 45 to indicate which external domains or websites are linked frequently from the reviewed website 10 and sometimes possible to establish which ones of the incoming links 21 come from external websites by using further data, as noted above. The link table 45 also enables an owner of the website 10 to find poorly linked or non-linked pages in order to find content 31 that cannot be found (or at least easily found) by the user or the search engine 11. The amount of links is also used to calculate the OnPage Rank (OPR) see below.

### Key performance indicator - webpage

It is possible to use the system 1 of the current disclosure to establish for any one or more of the webpages 20 a quality index or key performance indicator (KPI) with a score representative of the quality of the webpage 20 and its suitability for being identified by the search engine 11 and being presented high on the list of search results.

The KPI is calculated from a number of factors in order to determine in one figure the overall quality of the webpage 20 in terms of architecture, usage of meta information, technical reliability and content quality, etc.. The heterogeneity of the information in the world wide web results in a difficult calculation of the index. So what might be a good setting for one webpage 20, could be poor for another webpage 20. Moreover, the usage of standard software for shop-management systems and content management systems means that it is impossible for many website owners to reach the maximum score as the software for the shop management and content management and content management systems is not flexible enough.

The calculation of the KPI includes also the architecture aspects of the website, for example the minimum amount of clicks to reach a certain content on a webpage 20 from the homepage 21 or the level of the subfolders in the website 10. This needs to be correlated with the overall number of webpages 20within the website 10. For instance it might be reasonable to have seven hierarchy levels (or more) when the domain contains more than 1 million URL's, while three levels might be too many when only ten pages are present. Another factor in the calculation might be the amount of links placed on every webpage 20 in order to pass the link equity along the webpages 20.

The KPI can also take into account the meta information, the correct usage of meta titles and descriptions, adoption to the space being shown in the search result pages of search engines 11, as well as usage of canonical tags, robots.txt, correct alt tags in images and other information that is not visible to the regular user on the webpage 20 directly.

The technical reliability of the webpage 20 should be evaluated, calculating the amount of broken links within the webpage 20, as well as web server reliability and overall availability of the webpage 20. In case the web server works well and fast this factor will not be a big benefit compared to the rest of the factors. However, in case of a malfunction, it will lead to a heavy downgrade of the overall factor, as of course all kind of optimization is useless when the content 31 cannot be transmitted to the receiver.

Finally, the quality of the content 31 needs to be included. This part might consist of the overall text quality, as well as text uniqueness and the existence of a decent amount of content 15 at all, which might especially be an issue with shop systems that don't contain much information about the product initially. It helps, the search engines 11 as well as website users if all webpages 20 provide a (unique) headline (h1) and structure their contents by using sub-headlines (h2, h3, ...)

### Key performance indicator-website

The combination of the key performance indicators for each ones of the webpages 20 can be combined in order to produce an overall score for the website 10.

### Status Codes

The system 1 will gather and store in the database 50 automatically the HTML status codes of every one of the webpages 20, images, etc, so the user can figure out if a certain URL works fine (status code = 2xx) or is broken (status code = 4xx). The system 1 will check if target URLs redirect to a new target, and also determine if there is a 301 (permanent) or a 302 (temporary) redirect, which has will impact on the search engine optimization.

### Snippet tracking

A snippet 16 in the context of this disclosure is a small item of text or an image from the content 15 of the webpage 20, or a small piece of code (such as but not limited to HTML, Javascript, CSS) including a tag, etc. The system 1 of the current disclosure has a snippet tracking module 17 that enables tracking of the snippet 16. In one aspect of the disclosure the user instructs the crawler 13 to investigate the webpage 20 and to look for the presence or absence of a particular snippet 16. Suppose the snippet 16 is of interest and is the name of the CEO. The snippet tracking module 17 will look at the content 15 of every one of the webpages 20 crawled and create and store a list of those webpages 20 as part of the data entries 40 in the database storage 50 on which the CEO's name occurs. A data file 85 can then be generated for the particular snippet 16 by reviewing the data entries 40 in which addresses of the webpage 20 have been stored.

It will be appreciated that the snippet tracking module 17 does not necessarily extract the content 31 or the code, but only stores the address (URI) of the webpage 20 in which the snippet 16 has been found as well as the number of occurences. The user can review the report generated in the data file 85 and then, by using a hyper link associated with the address of the webpage 20, access the actual content 15 of the webpage 20 on which the snippets 16 are to be found. Some of the snippets 16 can be stored if technically feasible.

Another example of the use of the snippet module 17 is to identify the content 15 on which, for example, the company's telephone number occurs. Suppose that the company changes its telephone number. The snipping trapping module 17 can be given the old telephone number and instructs the crawler 13 to check if the old telephone number is still mentioned in one or more of the webpages 20. The crawler 13 will store the addresses of the identified ones of the webpages having the older telephone number. These will be displayed in the output file 85. In another example of the disclosure, it is possible to check if the tracking pixels 16 have been implemented correctly, or if a social network plug-in such as Facebook or LinkedIn are used on relevant ones of the webpages 20. For example, a single tracking pixel 16 is often used for online market research purposes. This tracking pixel 16 is invisible, but is used to track viewing of the webpage 20 as thus is an important fact in designing the webpage 20. The snippet tracking module 17 can be programmed to identify all of the websites 20 in which the tracking pixels 16 is present and, as a result determine which ones of the webpage 20 do not have the snippet 16 representing the tracking pixel 16.

### OnPage Rank (OPR)

The OPR is an internal calculation of the page rank of every one of the webpages 20 on the website 10, which is normalised to a value between 0 and 100 and depends on the link equity associated with the webpage 20. The OPR indicates the relative importance of every webpage 20 within the website 10 based on the number of links the webpage 20 receives from all of the other webpages 20 within the website 10. For instance, it is generally the case that the homepage 21 and the imprint page would be expected to have the highest value for the OPR, as both of these webpages 20 are generally linked from all pages.

### Semantic Analysis

In the same step as the crawling process (step 210), the content 31 of all the documents undergo a term frequency analysis in order to determine the most important terms in the content 31. A word count is carried out for each one of the terms in the content 31 and the most important ones of the terms are also stored in the database 50 connected with the URL to enable the user to sort and filter the webpages 20 not only based on technical-data, but also on the basis of the content 31 included in the webpage 20.

In one aspect of the invention, the term frequency is generated by normalising the word count of a particular word against the number of words in the content 31 of the webpage 20. This allows the relative strengths of the webpages 20 to be compared against each other for a particular one of the terms. Stop terms, such as "and", "the" or "to" can be used to ensure that these words are not counted. In a further and complementary aspect of the invention, the terms are weighted to identify their importance. This weighting can be carried out by applying individually calculated weights on particular terms considered to be important to the subject of the website 10 (and, for example, words like and, the or to could be weighted with the value 0). In a further aspect of the invention, then the weightings are determined by the inverse of the relative frequency of the use of the individual terms on the Internet. In this aspect, a frequently used words such as "and" would have a very small value.

The product of the term frequency or word count and the weighting factor is calculated and those terms having the highest values are stored in the data entries 40.

In a further aspect of the invention, linked external webpages on other websites can also be semantically analysed using the method outlined above. This enables the content of the external webpages to also be analysed for relevance and any important terms on the external pages to be identified. For example, the external links 29 might link to pages which are irrelevant or misleading, or the content of the external webpages may have been changed since the external links 29 were originally set.

### Link Visualizer

The system 1 can also include a link visualizer 65. The link visualizer 65 accesses from the database 45 the internal links and the calculated KPI. The link visualizer 65 selects at least one of the webpage 20 having the highest score as the KPI and produces the output file 85 which can be used to present a graphic of the link structure of the webpage 20 in the browser 6. The webpages 20 having the highest score will be placed at the center of the display in the output file 85, whilst those webpages 20 having a lower score will be grouped around the most important webpages(s) 20. This can be illustrated in Fig. 3a.

The user is presented with an easy overview to show whether the website 10 has a clean site structure, as well as finding unused link opportunities or dead ends within certain webpages 20, or other parts of the website 10 such as folders or topics, which might lead to a negative user experience.

### Link Opportunities

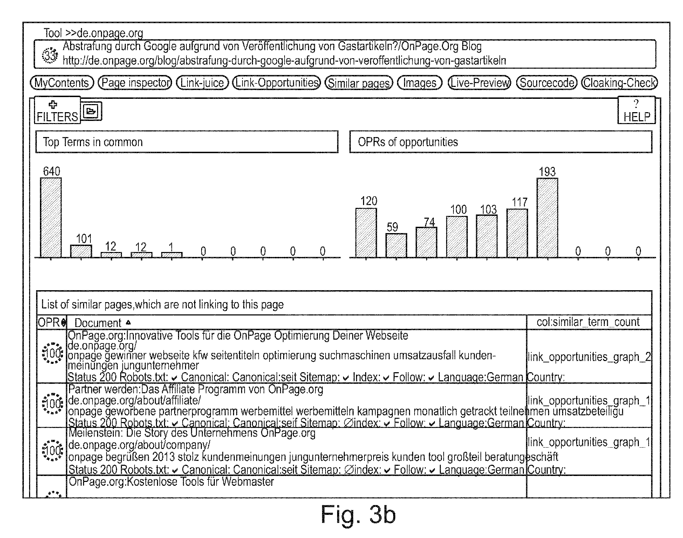

The method of the current disclosure enables the discovery of opportunities to link the webpages 20 with one another. The important terms in the content 31 of the webpage 20 are identified, as disclosed above, and a comparison can be made between these identified important terms with the terms of all other documents within the website 10, in order to find those webpages 20 that offer similar content 31. Such documents with similar content have one or more terms in common with the other webpages 20, but do not link to the desired webpage 20. This feature is especially helpful when sorting the found pages by their OnPage rank, in order to give the most link equity to the target webpage 20. The owner of the website 10 can uses this tool to build up a clean internal link structure in order to give the users the best experience, as well as strengthen specific landing pages in order to enable an optimized ranking on the search engines 11. An example is shown in Fig. 3b.

The semantic analysis of external webpages described above also allows the external webpages to be considered for additional link opportunities if the external webpages contain relevant terms.

### Inspector

The OnPage Site inspector gathers all of the technical data and other information stored in the data entries 40 and relevant to one specific URL within the website 10, in contrast to all the other reports that are showing specific parameters to be improved (i.e. missing title tag, broken links, etc.) for all pages. That is important to optimize relevant landing pages at a very granular level, which might be the tipping point in strong competition environments.

### Canonical Settings

The crawlers 13 of the system 1 will gather and store in the database 50 the canonical settings of the webpages 20. These canonical settings are to be found in the HTTP Response Header and/or HTML Meta Attributes, The graphical output of the system will help the user to determine the canonicalized pages and their influence on the internal link equity. These settings are also used to precise the calculation of the OnPage Rank (see above)

### Nofollow Links

The crawlers 13 of the system 1 will gather and store in the database 50 any of Nofollow settings of the webpages 20. These NoFollow settings are to be found in HTTP Response Header and/or HTML Meta Attributes and/or Link Attribute. It is known that any Nofollow links will fail to pass link equity to their link targets and may harm the architecture of the website 10, as any landing pages 12 with NoFollow links will not be ranked (or ranked badly) by the search engine 11 in case the internal links 28 and the external links 29 are marked as NoFollow.

The user can query the database 50 using the system 1 and generate a list of those unfollowed links.

### Content Uniquness

The system 1 can compare the content 13 of the webpages 20 in order to detect any overlaps in the content 13 between different ones of the webpages 20. The system 1 will output statistics to the user on request, which enables the user to identify those webpages 20 which contain the overlapping (or substantially overlapping) content. The overlapping content includes, but is not limited to, identical paragraphs, tables, lists, etc. on the webpages 20. The user can then reduce the amount of duplicate content 13 on different ones of the webpages 20 (or indeed combine the webpages 20). The search engines 11 will find more original content 13 on different webpages 20 within the website 10. This will positively affected the attention of the crawlers 13 from the search engine 11 and ensure a higher ranking in the results of the search engine 11.

The overlapping content is determined by storing n-grams of the content 13 of the webpage 20 in the data entry 40. Those n-grams are compared with the other webpages 20 in order to determine how many unique n-grams are found on a particular webpage 20. The ratio between unique and total n-grams will be calculated to a quotient which quantifies uniqueness of the content 13. The quotient is stored in the data entry 40.

The graphical interface in the browser 6 displays the graphic file 85 providing a list of the content uniqueness quotients of every webpage 20.

### Orphaned Pages

The system 1 uses the information from the link tables 45 and the data entries 40 to determine webpages 20 which are found in the sitemap but are not linked from other websites on this domain. These webpages are presented to the user via the graphical output of the system in the browser 6.

### Keyword Focus

With the input of a keyword the system 1 can determine which parts of a HTML document on the webpages 20, lack the occurrence of this keyword. This includes the documents Title, description, link anchors, ALT tags, etc.

## Claims

1. A method for management of websites (10) comprising:
accessing a plurality of webpages (20) of a domain of at least one of the websites (10); analyzing the accessed plurality of webpages (20) to extract at least one of technical page metadata (30) or content (31) from the accessed plurality of webpages (20);
creating a plurality of data entries (40, 45) in a non-transitory database storage (50) relating to the extracted technical page metadata (30).

2. The method of claim 1, further comprising:
selecting at least one of the data entries (40); and
displaying the selected data entries (40).

3. The method of claim 1 or 2, further comprising accessing technical domain metadata (15).

4. The method of any one of the above claims, further comprising calculating metrics (40) relating to a landing page (12).

5. The method of any one of the above claims, further comprising analysis of the content (31).

6. A system (1) for the management of websites (10) comprising:
a plurality of crawlers (13) for analyzing technical page metadata from a plurality of pages (20) of a domain of a selected one of the websites (10);
a data storage system (50) for creating a plurality of data entries relating to the technical page metadata (30) in a database store (50);
a data analysis system (60) for receiving input commands (70) and creating output files from selected ones (80) of the plurality of data entries (40) dependent on the received input commands while giving the opportunity to apply a wide range of filter combinations like status codes with content criteria etc.

7. The system (1) of claim 6, wherein at least one of the plurality of crawlers (13) is adapted to further analyze the at least one of technical domain metadata or content (31) of the selected website (10).

8. The system (1) of claim 6 or 7, further comprising a display for outputting the created output files.

9. The system (5) of any one of claims 6 to 8, wherein the technical page metadata comprises at least one of broken links, get parameters, click path lengths, number of pictures, presence of alt-tags, length of links, depth of folder, text uniqueness, link anchor texts.

10. A computer program product fixed in non-transitory computer storage medium and having computer-executable instructions for causing a computing system to perform operations relating to the management of websites, the operations comprising:
accessing a plurality of pages (20) of a domain of at least one of the websites (10);
analyzing the accessed plurality of pages (20) to extract technical page metadata (30) from the accessed plurality of pages (20);
creating a plurality of data entries (40) in a non-transitory database storage (50) relating to the extracted technical metadata (30).

11. A method for producing an output file (85) indicative of the structure of a website (10) comprising:
receiving an input command (70) from a user;
processing the input command (70) in a data analysis system (60);
retrieving at least one item of technical page metadata (30) from a non-transitory database storage (50) responsive to the processed input command (70);
supply the at least one item of technical page metadata (30) to the output file (85).
